# EUROPEAN PATENT SPECIFICATION

(11) **EP 4 452 548 B1**
(45) Date of publication and mention of the grant of the patent: **25.11.2026**
(21) Application number: 22846947.4
(22) Date of filing: 22.12.2022
(51) Int. Cl.: B23K 26/16, B23K 26/08, B23K 26/10, B23K 26/067, B23K 26/082, B23K 101/16, B23K 101/36

(54) **METHOD FOR NON-CONTACT PROCESSING ON A RIBBON-LIKE ARTICLE, PREFERABLY FOR THE PRODUCTION OF ELECTROCHEMICAL CELLS**
VERFAHREN ZUR KONTAKTLOSEN BEHANDLUNG EINES BANDFÖRMIGEN GEGENSTANDES, VORZUGSWEISE ZUR HERSTELLUNG ELEKTROCHEMISCHER ZELLEN
PROCÉDÉ DE TRAITEMENT SANS CONTACT D'UN ARTICLE DE TYPE RUBAN, DE PRÉFÉRENCE POUR LA PRODUCTION DE CELLULES ÉLECTROCHIMIQUES

(30) Priority: 22.12.2021 IT 202100032330
(43) Date of publication of application: 30.10.2024
(73) Proprietor: G.D S.p.A., 40133 Bologna (BO) (IT)
(72) Inventor: CAMPAGNOLI, Enrico, 40133 Bologna (BO) (IT); BIONDI, Andrea, 40133 BOLOGNA (BO) (IT)
(74) Representative: Locas, Davide
(86) International application number: PCT/IB2022/062686
(87) International publication number: WO 2023/119226

(56) References cited:
- DE-A1- 4 301 575
- JP-A- H11 254 176
- US-A- 4 767 909

## Description

The present invention concerns a method for non-contact processing of a ribbon-like article, as referred in claim 1.

It is also directed to a method for non-contact processing on a ribbon-like article.

The present invention finds a preferred, although not exclusive, application in the field of the production of electrochemical cells and, more generally, in the technical sector of production of products formed starting from a ribbon-like article.

In particular, in the relevant technical field, it is known to use ribbons of conductive material that are processed and wound to make anode and/or cathode of electrochemical cells.

In known production processes, these ribbons are subjected to a patterning processing at their edge, before being cut and wound to form a sandwich composed of a pair of conductive materials which is separated by an insulating layer, to form anode and cathode of the electrochemical cell.

This processing can take place by means of laser heads that operate on the portion of the ribbon concerned so as to achieve the desired pattern.

Further examples of known machines are disclosed in JP H11 254176 A (describing the preamble of claim 1), US 4 767 909 A, DE 43 01 575 A1 and WO 2015/064418 A1.

In a known embodiment, the ribbon is made to slide relative to a stationary laser head that directs a beam of light onto the moving ribbon so as to obtain the required processing.

In this description as well as in the accompanying claims, certain terms and expressions are deemed to have, unless otherwise expressly indicated, the meaning expressed in the following definitions.

The term "ribbon-like article" refers to any solid product which, within an industrial production line, is presented in the form of an elongated strip, i.e. an element in which the longitudinal extension is significantly greater than its transversal extension.

The ribbon-like article also has characteristics that allow a certain bending while its advancing along a relative production line.

The ribbon-like article can for example be made of conductive material and be intended, possibly once cut, to form a sandwich for making electrochemical cells, together with other layers.

The term "loop path" means a path along which the ribbon-like article or other element travels between a starting point and an end point. The loop path can be "closed", in the event that the starting point and the end point coincide, or "open" in the event that the starting point and the end point are close to each other, but not coinciding.

The term "non-contact processing" means any type of processing that can take place without there being contact between the ribbon-like article and the operating unit that carries out the processing.

Such processing can be performed by supplying energy to the ribbon-like article for example through a light beam or through ultrasound. Possible non-contact processing includes patterning, etching processing, etc...

The expression "continuous" refers to an expression of motion, which means an operation that takes place without interruption, without there being a stop or interruption in the operation in question. In particular, with reference to a processing on a ribbon-like article, the term "continuous" indicates that processing takes place continuously on the ribbon-like article, without any interruptions in the processing performed.

It should also be noted that the expression "to displace an object between a first position and a second position" means both to displace from the first position to the second position and to displace from the second position to the first position.

This definition applies in a similar way to similar expressions of motion, such as transferring or moving a generic object between two positions or between two zones or even between two different operating configurations.

The Applicant, in the context of the constant need to increase the performance and the efficiency of the production processes, has previously observed that, in a non-contact processing line of a ribbon-like article, the feed rate of the ribbon-like article with respect to the operating unit that carries out the processing can be an important element limiting the production capacity of the line itself.

This limitation, moreover, is even more critical if the processing requires the realization of relatively small-sized details on the ribbon-like article to be processed, such as in the case of the realization of patterns. In particular, the Applicant has observed that the ribbon-like article must advance with respect to the operating unit at a sufficiently reduced speed in order to ensure the correct execution of the requested processing.

This requirement implies an overall slowdown in the production line, unless it is envisaged slowing down the ribbon-like article at the operating units.

However, the Applicant has observed that this solution leads to the formation of states of tension on the ribbon-like article, the generation of which may compromise the production quality of the end product obtained through the ribbon-like article once processed.

In order to increase the speed of execution of non-contact processing on a ribbon-like article, the Applicant has therefore perceived that this can be achieved by setting in motion, in addition to the ribbon-like article, also the operating unit.

The Applicant also noted that using more than one operating unit it is possible to have one of the operating units carry out reset actions, while the other carries out the processing.

The Applicant has therefore further perceived how it is possible to realize a particularly versatile solution, adaptable to different types of non-contact processing, on different formats of ribbon-like articles, by appropriately exploiting the time interval during which the operating units travel the reset segment and do not perform any processing on the ribbon-like article.

The Applicant has finally found that by providing appropriate processing instructions to the operating unit when it transits along the reset portion, it is possible to use more than one operating unit for the non-contact processing of a ribbon-like article, regardless of the frequency with which the processing that must be carried out on the article itself is repeated.

Thanks to the presence of more than one operating unit, it is therefore possible to increase productivity in the execution of non-contact processing despite the need to carry out precision processing that requires a sufficiently reduced relative speed between the operating unit and the ribbon-like article for their correct execution.

In a first aspect thereof, therefore, the present invention concerns a method for non-contact processing on a ribbon-like article according to claim 1.

Thanks to these characteristics, the method for non-contact processing on a ribbon-like article, the operating unit can carry out cyclical processing on the ribbon-like article even if the processing rate neither corresponds to the time necessary for the operating unit to travel along the entire loop nor is a multiple or submultiple thereof. In fact, during the transit through the reset portion, the operating unit can be reprogrammed by providing suitable processing instructions, thus obviating any lack of synchronization between the processing rate and the movement of the unit.

In this way it is possible to use the same apparatus for processing different formats since it is not necessary to envisage specific geometric relationships between the components that cause the movement of the operating unit and of the ribbon-like article in the apparatus respectively. In other words, thanks to the above aspect, it is possible to simplify the so-called format change operations. According to one example not covered by the present invention, it is also disclosed an apparatus for non-contact processing on a ribbon-like article, preferably for the production of electrochemical cells.

Preferably, the apparatus comprises a conveying device of the ribbon-like article including an inlet section, an outlet section and a connecting segment extending between said inlet section and said outlet section.

Preferably, the apparatus comprises at least two operating units configured to perform non-contact processing on the ribbon-like article, said operating units being movable preferably along a loop path. Preferably said loop path comprises a processing portion facing said connecting segment along which the operating units can perform non-contact processing on the ribbon-like article.

Preferably said conveying device is configured to advance the ribbon-like article at a feed rate along said connecting segment and said operating units are configured to displace at a first speed along said processing portion.

Preferably the speed difference between said first speed and said feed rate is less than a predetermined value.

Thanks to these characteristics, the apparatus for non-contact processing on a ribbon-like article can operate by maintaining a speed difference between the ribbon-like article and the operating units lower than a certain value so that the operating unit can carry out the envisaged non-contact processing.

In this way, the ribbon-like article can be advanced continuously and/or at a higher speed than the known solutions such that the productivity of the production line on which the apparatus made according to the aforementioned example is applied is increased.

According to a further example not covered by the present invention, it is disclosed a method for non-contact processing on a ribbon-like article, preferably for the production of electrochemical cells.

Preferably the method comprises providing at least two operating units configured to perform non-contact processing on the ribbon-like article, said operating units being preferably movable along a loop path. Preferably the loop path comprises a processing portion along which said operating units face the ribbon-like article and a reset portion.

Preferably the method comprises advancing the ribbon-like article at a feed rate on a conveying device.

Preferably the method comprises performing by at least one of said operating units a predetermined non-contact processing on the ribbon-like article while said ribbon-like article is moving at said feed rate and said at least one operating unit is displacing along said processing portion at a first speed.

Preferably the speed difference between said first speed and said feed rate is less than a predetermined value.

The method according to this example not covered by the present invention allows to carry out non-contact processing on the ribbon-like article while the operating unit that carries out the processing is displaced, at the same time controlling the speed difference between it and the ribbon-like article itself, always for the benefit of the productivity of the apparatus and the production line to which it can be applied.

According to a further example not covered by the present invention, it is disclosed an apparatus for non-contact processing on a ribbon-like article, preferably for the production of electrochemical cells.

Preferably, the apparatus comprises a conveying device of the ribbon-like article comprising an inlet section, an outlet section and a connecting segment extending between said inlet section and said outlet section.

Preferably, the apparatus comprises at least two operating units configured to perform non-contact processing on the ribbon-like article, said operating units being movable preferably along a loop path. Preferably said loop path comprises a processing portion facing said connecting segment along which the operating units can perform non-contact processing on the ribbon-like article.

Preferably the apparatus comprises a variation device for varying the speed of displacement of said operating units.

Preferably said variation device is configured to vary the speed of each of said operating units, individually, according to their position along said loop path.

Thanks to these characteristics, the apparatus for non-contact processing on a ribbon-like article can change the speed of each of the operating units to make it move at a different speed in the loop path along which it is displaced.

In this way it is possible to adjust the speed of the operating unit in an appropriate manner such that the correct relative speed between the ribbon-like article and the operating unit itself can be envisaged when the non-contact processing is performed while this speed is varied when there is no need to control the speed.

Thanks to these characteristics it is possible to advance the ribbon-like article continuously and/or at a higher speed than the known solutions such that the productivity of the production line on which the apparatus made according to the aforementioned example is applied is increased.

According to a further example not covered by the present invention, it is also disclosed a method for non-contact processing on a ribbon-like article, preferably for the production of electrochemical cells.

Preferably, the method comprises providing at least two operating units configured to perform non-contact processing on the ribbon-like article, said operating units being movable preferably along a loop path comprising a processing portion along which said operating units face the ribbon-like article.

Preferably the method comprises advancing the ribbon-like article at a feed rate on a conveying device.

Preferably the method comprises performing by at least one of said operating units a predetermined non-contact processing on the ribbon-like article while said ribbon-like article is moving at said feed rate and said at least one operating unit is displacing along said processing portion at a first speed.

Preferably the method comprises increasing the speed of said at least one operating unit to a second speed, higher than said first speed when it has finished the non-contact processing on the ribbon-like article, at a reset portion of said loop path.

The method according to this example not covered by the present invention makes it possible to provide two distinct speeds for the operating unit, a first for performing non-contact processing on the ribbon-like article and a second which can be used when the operating unit does not perform processing. In this way it is possible to make the operating unit adopt the most suitable speed during processing, without affecting the productivity of the apparatus.

The present invention may have at least one of the further preferred features set forth below.

In preferred embodiments, said operating units are configured to displace at a second speed, higher than said first speed, along a reset portion of said loop path.

Thanks to this characteristic, it is possible to adopt a higher speed for the operating units when they are not performing processing on the ribbon-like article. In this way, a speed reduction of the operating units while performing processing on the ribbon-like article can be compensated by the speed increase in the reset portion.

Preferably said first speed is lower than and acts in the same direction as a feed rate of the ribbon-like article in said processing portion. In this way it is possible to obtain a configuration such that the operating units follow the ribbon-like article, a configuration that allows to obtain the maximum feed rate of the ribbon-like article compatible with the processing capacity of the operating units.

Said connecting segment may extend like arc of a circle and defines a centre of curvature, said operating units being rotatable around an axis of rotation passing through said centre of curvature. Thanks to the aforesaid characteristic it is possible to obtain a compact solution for the construction of the apparatus, using a wheel for moving the ribbon-like article in the zone where the processing takes place and adopting rotating operating units, with axis of rotation concentric to the arc of a circle defined by the ribbon-like article during its movement.

Preferably said loop path is closed. In some embodiments said loop path is formed by a circumference. The above characteristics all contribute to providing that the operating units move continuously, making a complete revolution, possibly a complete rotation, during the operation of the apparatus.

Preferably said processing portion and said reset portion are sectors of said circumference.

In this way it is possible to divide in a simple and clear way the steps in which the operating units carry out the processing and in which they move at a certain speed, compared to those in which they do not perform the processing and a different speed can be provided for them.

Preferably said operating units are supported on respective arms extending radially from a rotating body.

In this way it is possible to easily support the operating units, placing them in the appropriate position for the required processing, limiting the inertial masses present in the apparatus.

Said arms may be supported on respective ring bodies which extend perimetrically to said rotating body and are rotationally constrained thereto.

This characteristic allows to support the arms on the rotating body in a precise manner, allowing to increase/decrease at the same time the rotation speed of one of the rotating bodies through relative movement between the ring body and the rotating body.

Preferably the rotating body is hollow and is configured to allow the passage of a light beam being transmitted through respective slots formed in said rotating body to each of said arms.

Thanks to this characteristic, the processing can be carried out through laser and the relative light beam can be easily brought at the processing zone defined by the operating unit.

Preferably said rotating body comprises a further slot, placed radially opposite to said slot and through which a support connected to a respective ring body protrudes towards the inside of the rotating body and which is supporting a reflective element placed such that it intercepts said light beam at the axis of rotation and configured so as to deflect said light beam towards a respective arm.

In this way a single light beam can be sent to each of the operating units simplifying the realization of the apparatus.

Preferably the operating units are configured to be in distinct positions along said loop path, such that at least one of said operating units is placed in said processing portion of the loop path in such a way as to perform non-contact processing on the ribbon-like article. Preferably the apparatus comprises at least three operating units, wherein at least two of said operating units are placed in said processing portion of the loop path in such a way as to perform non-contact processing on the ribbon-like article. Preferably the apparatus comprises at least six operating units, wherein at least five of said operating units are placed in said processing portion of the loop path in such a way as to perform non-contact processing on the ribbon-like article.

Thanks to these characteristics, a continuous processing of the ribbon-like article can be guaranteed, since an operating unit is always present in a position suitable to perform the requested processing, while nevertheless providing that the speed control required by the aforementioned aspects of the present invention takes place.

Preferably said operating units are movable along said loop path independently of each other. In this way it is possible to control the speed of each of the operating units independently of the others, according to the specific operating needs.

The apparatus may comprise a variation device for varying the speed of displacement of said operating units, said variation device being configured in such a way as to change the speed of each of said operating units, individually, according to their position along said loop path, said variation device preferably being configured to vary the speed of the operating unit from said first speed to said second speed and vice versa.

Thanks to this characteristic, it is possible to change the speed of the operating units according to their position within the loop path, adapting it to the specific operating needs associated with each portion of the path.

Preferably said variation device is configured in such a way as to displace each of said arms, individually, along a perimeter direction of said rotating body.

In this way it is possible to achieve a speed variation by operating through mechanical kinematic mechanisms, reducing the need for electronic components and position sensors.

Preferably said variation device comprises a first rod rotatably connected to said rotating body and a second rod rotatably connected at a first end thereof to said arm and at a second end thereof to said first rod, so that a rotation of said first rod generates the displacement of the relative arm. Preferably said variation device is configured in such a way as to displace a respective arm with respect to said rotating body when said arm is in said reset portion. Preferably said operating units are configured to perform non-contact processing on the ribbon-like article during the advancement of the ribbon-like article along said connecting segment.

These characteristics make it possible to obtain speed regulation through rotation of rods, with a solution that is particularly simple and effective from the constructive point of view and generally reliable. In addition, the variation can take place at the reset zone, once processing is finished.

In some embodiments said conveying device comprises a main wheel along which said connecting segment is defined. Preferably said main wheel comprises a perimeter wall configured in such a way that the ribbon-like article is supported on said perimeter wall externally to said main wheel and being further configured in such a way that an edge of the ribbon-like article protrudes in an axial direction from said perimeter wall.

In this way it is possible to arrange the ribbon-like article in an appropriate way in order to make specific processing at an edge thereof, thus making the apparatus particularly suitable for the realization of electrochemical cells.

Preferably said operating units are positioned internally to said perimeter wall in such a way as to face the ribbon-like article.

Preferably, the apparatus comprises a suction device positioned externally to said main wheel along at least a portion of its perimeter.

In this way it is possible to adopt a particularly compact solution for the operating units, also leaving available a zone for the presence of a suction device which can be used to remove any processing residues.

Said operating units may be positioned internally and externally to said perimeter wall in such a way as to carry out operations on opposite faces of the ribbon-like article.

In this way two different operations can be carried out simultaneously on the opposite faces of the ribbon-like article with a significant increase in productivity.

Preferably said main wheel is rotatable around said axis of rotation with a constant rotation speed. In this way it can be ensured that the feed rate of the ribbon-like article is constant.

In some embodiments said inlet section comprises a first wheel and said outlet section comprises a second wheel.

This characteristic makes it possible to realize a compact structure capable of guaranteeing high productivity.

Preferably, the apparatus comprises a protection element arranged along said loop path at said reset portion configured to prevent the operating units from performing processing on the ribbon-like article along said reset portion.

Thanks to this characteristic, it can be prevented that the operating units, which can process without contact, accidentally perform processing on the ribbon-like article outside the operating portion.

Preferably operating units comprise galvanometers. Preferably, said operating units comprise movable processing elements configured to perform non-contact processing on the ribbon-like article said movable processing elements preferably being configured to have a response time of the order of a millisecond. In some embodiments said movable processing elements comprise movable mirrors.

These characteristics each contribute to making the apparatus particularly suitable for processing through laser intended for the realization of patterns on the ribbon-like article. The precision of the processing obtained through the movable elements is not in fact affected by the absolute speed of the ribbon-like article thanks to the fact that the relative speed of the latter with respect to the operating units can be significantly reduced.

Preferably said operating units are configured to move at a second speed, higher than said first speed, along said reset portion of said loop path.

Thanks to this characteristic, it is possible to adopt a higher speed for the operating units when they are not performing processing on the ribbon-like article. In this way, a speed reduction of the operating units while performing processing on the ribbon-like article can be compensated by the speed increase in the reset portion.

Preferably said first speed is lower than and consistent with a linear feed rate of the ribbon-like article.

In this way it is possible to obtain a configuration such that the operating units follow the ribbon-like article, a configuration that allows to obtain the maximum feed rate of the ribbon-like article compatible with the processing capacity of the operating units.

Said operating units may rotate about an axis of rotation. In this way it is possible to carry out the movement of the operating units in a simple and easily controllable manner.

Preferably said operating units move in distinct positions along said loop path, at least one of said operating units is placed in the processing portion and performs the non-contact processing on the ribbon-like article when the other of said operating units is placed in the reset portion. Preferably it is envisaged to provide at least three operating units, wherein at least two of said operating units are placed in said processing portion and simultaneously perform non-contact processing on the ribbon-like article when the other of said operating units is placed in the reset portion. Preferably it is envisaged to provide at least six operating units, wherein at least five of said operating units are placed in said processing portion and simultaneously perform non-contact processing on the ribbon-like article when the other of said operating units is placed in the reset portion.

Thanks to these characteristics, a continuous processing of the ribbon-like article can be guaranteed, since an operating unit is always present in a position suitable to perform the requested processing, while nevertheless providing that the speed control required by the aforementioned aspects of the present invention takes place.

Preferably, the speed of said operating units is varied, individually, according to their position along said loop path. Thanks to this characteristic, it is possible to change the speed of the operating units according to their position within the loop path, adapting it to the specific operating needs associated with each portion of the path.

Said operating units may be supported on arms constrained to a rotating body, the speed of each of said operating units being varied by displacement of a respective arm with respect to said rotating body while said rotating body rotates, said arms being displaceable independently one from the other. Preferably the speed of each of said operating units is increased by displacing the respective arm in one direction with respect to said rotating body and being decreased by displacing the respective arm in the opposite direction.

These characteristics allow each to make a speed variation by operating through mechanical kinematic mechanisms, reducing the need for electronic components and position sensors.

Preferably said ribbon-like article is wound on a main wheel of the conveying device. Preferably said ribbon-like article is advanced on said conveying device with constant speed and tension.

Thanks to these characteristics, it is possible to move the ribbon-like article in a constant manner, while ensuring a constant tension during the movement of the same.

Said ribbon-like article may protrude axially with respect to a perimeter wall of the main wheel. In this way it is possible to arrange the ribbon-like article in an appropriate manner in order to perform specific processing at one of its edges, facilitating the processing of ribbon-like articles for the production of electrochemical cells.

It may be envisaged to perform said non-contact processing, it comprises moving movable processing elements of said operating units at a speed higher than the feed rate of the ribbon-like article, preferably with a response time of the movable processing elements of the order of a millisecond. Also these characteristics each contribute to making the apparatus particularly suitable for processing through laser intended for the realization of patterns on the ribbon-like article.

Preferably said reset portion is subsequent to said processing portion along said loop path. In this way the speed of the operating unit can be varied within the reset portion of the loop path once the processing has been performed on the ribbon-like article.

Preferably said non-contact processing is carried out by supplying energy to the ribbon-like article. Preferably, said energy is supplied to the ribbon-like article through a light beam or through ultrasound.

Preferably said non-contact processing is a non-contact laser processing, therefore performed through laser.

Preferably said operating units are laser heads.

Preferably said non-contact processing includes patterning or etching processing.

It should be noted that some steps of the methods described above may be independent of the order of execution indicated. In addition, some steps may be optional. In addition, some steps of the methods may be performed repetitively, or they may be performed in series or in parallel with other steps of the method.

The characteristics and advantages of the invention will become clearer from the detailed description of an embodiment shown, by way of non-limiting example, with reference to the appended drawings wherein:
- Figure 1 is a perspective view of an example of apparatus for implementing the method of the present invention;
- Figure 2 is a plan view of the example of the apparatus of Figure 1;
- Figure 3 is a side sectional view of the example of apparatus of Figure 1;
- Figure 4 is a further perspective view of the example of apparatus of Figure 1, with a protection element removed for greater illustrative clarity; and
- Figure 5 is a schematic view according to a plan view of an alternative example of an apparatus for implementing the method of the present invention.

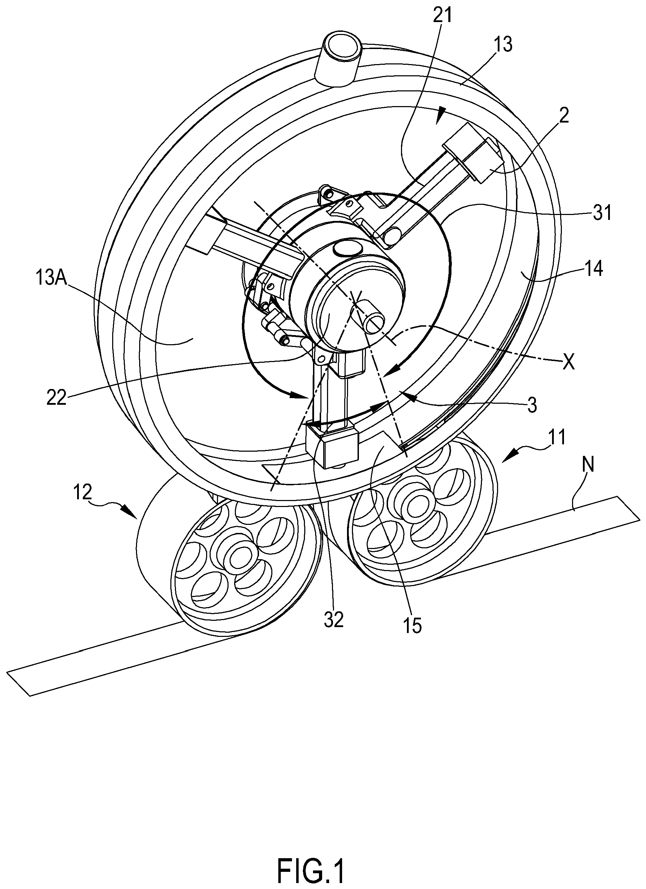

With reference initially to Figure 1, 100 indicates as a whole an apparatus for non-contact processing on a ribbon-like article N for implementing the present invention.

The ribbon-like article N on which the apparatus 100 performs the non-contact processing may be intended for the production of electrochemical cells.

For this purpose, the processing can be represented by the realization of a pattern at a longitudinal edge B of the ribbon-like article N. It must in fact be observed that in the field of production of electrochemical cells anode and cathode can be obtained by winding a sheet of suitably processed conductive material. Such processing typically involves realizing a specific pattern on the edge of the sheet of conductive material. It is advantageous to realize the sheet thus processed starting from a ribbon-like article on which the pattern is repeated cyclically and which is subsequently cut into individual sheets.

As can be appreciated from Figure 1, the apparatus comprises a conveying device 1 that allows the ribbon-like article N to be advanced during its processing. The conveying device 1 may be part of a production line for electrochemical cells, or more generally for other finished or semi-finished products.

The figures only show an inlet section 11 and an outlet section 12 of the ribbon-like article N, it being understood that upstream and downstream of these sections there may be other components of the production line, the description of which is however not essential for understanding the present invention as defined in the appended claims.

Preferably, the advancement of the ribbon-like article N is obtained by means of a wheel system and, in preferred embodiments, it is provided that the conveying device 1 comprises a first wheel 11A, at which said inlet section 11 is defined, a second wheel 12A, at which said outlet section 12 is defined, and a main wheel 13A, through which the ribbon-like article N is conveyed from the inlet section 11 to the outlet section 12 and at which non-contact processing takes place preferably according to the methods described in greater detail below. The segment between the inlet section 11 and the outlet section 12 will generally be referred to as the connecting segment 13.

The main wheel 13A is rotatable about an axis of rotation X by advancing the ribbon-like article N with a preferably constant feed rate.

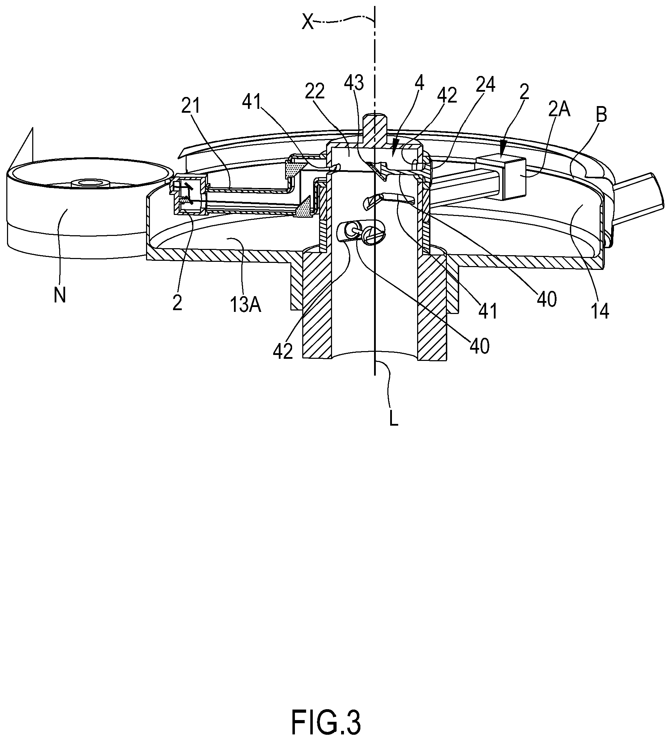

As can best be seen from Figure 3, the main wheel 13A comprises a perimeter wall 14 on which the ribbon-like article N is externally supported during its movement.

Advantageously, the perimeter wall 14 is configured in such a way that the edge B edge B of the ribbon-like article N protrudes in the axial direction, i.e. along the axis of rotation X, from the perimeter wall 14.

In this way the edge B of the ribbon-like article N can be subjected to non-contact processing by operating units 2 which face the edge B. For example the operating units 2 can be laser heads which operate, without contact, on the edge B of the ribbon-like article to make a pattern.

For this purpose, in preferred embodiments the operating units 2 may comprise galvanometers 2A. The use of galvanometers 2A advantageously allows to provide for the presence of movable processing elements 23, preferably comprising mirrors 23A, which can be displaced quickly, for example with response times of the order of milliseconds, directing a light beam in such a way as to carry out a specific processing on the ribbon-like article N and in particular on the edge B.

In some embodiments, the operating units 2 are supported on respective arms 21 extending radially from a rotating body 22 that allows the movement thereof according to methods that will be described in more detail below.

As better visible in the embodiment shown in Figure 3, the arms 21 can be supported on respective ring bodies 24 which extend perimetrically to the rotating body 22 and are rotationally constrained thereto.

Preferably the rotating body 22 is hollow and is configured to allow the passage of a light beam L which can allow to perform non-contact processing on the ribbon-like article N. In order to allow the transmission of the light beam L up to the operating units 2 a slot 41 can be provided and made on the rotating body 22 at each arm 21.

In some embodiments the rotating body 22 may comprise a further slot 42, placed radially opposite to the slot 41 and through which a support 40 connected to one of the ring bodies 24 and supporting a reflective element 43 protrudes into the rotating body 22.

The reflective element 43 is advantageously placed in such a way as to intercept the light beam L, preferably at the axis of rotation X, and divert the beam towards a respective arm 21. The reflective element 43 can also be configured so as to allow a part of the beam L to pass to a subsequent reflective element 43 along the axis X. In this way, the same beam can still be used for all the operating units 2 present in the apparatus 100.

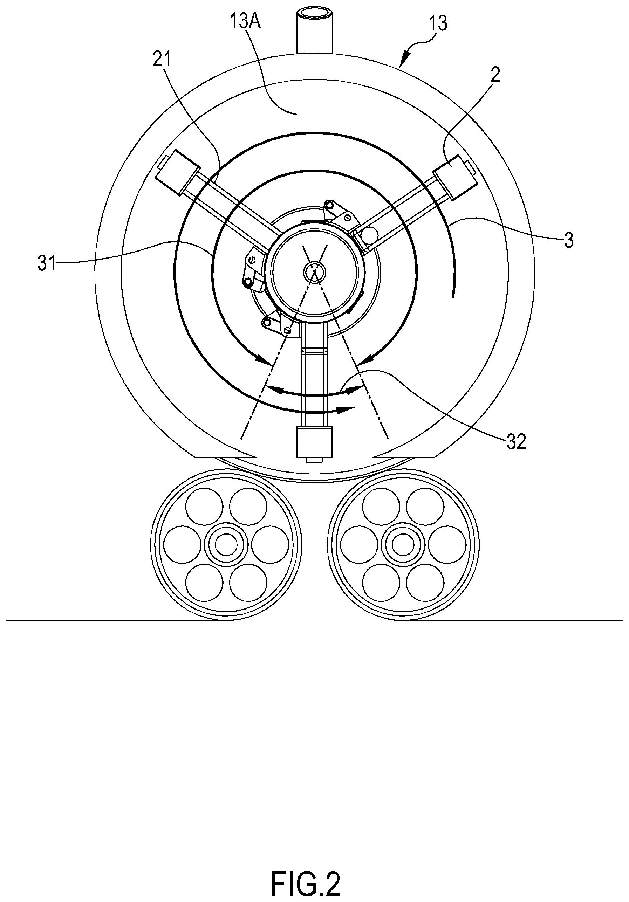

With reference again to figures 1 and 2, in preferred embodiments, the operating units 2 move along a loop path 3, in such a way as to follow the ribbon-like article N as it advances through the main wheel 13A or, more generally, along the connecting segment 13. In other words, the operating units 2 can move with a lower speed and in the same direction as the feed rate va of the ribbon-like article N.

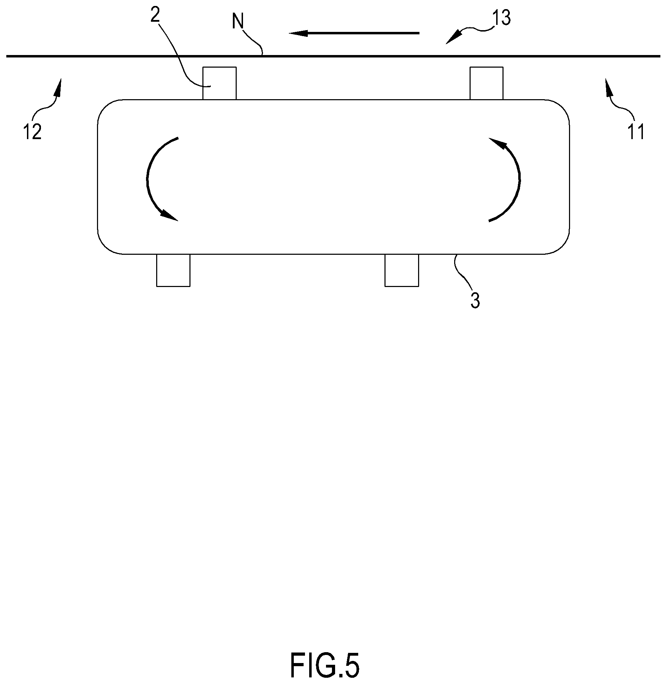

In preferred embodiments, the loop path 3 is formed by a circumference, preferably concentric to the arc of a circle which defines the connecting segment 13 on the wheel 13A. However, it will be appreciated that more generally, the loop path 3 can be closed, but with a different shape with respect to a circumference, as for example in the embodiment of Figure 5.

With reference again to Figure 2, the loop path 3 can be made in such a way that the operating units 2 are arranged internally with respect to the connecting segment 13 and preferably internally with said perimeter wall 14 such that they face the ribbon-like article N.

This arrangement favours the possibility of placing a suction device 6 placed externally to the main wheel 13A to remove any processing residues, such as those that can be generated in the case of non-contact laser processing.

In some embodiments, not illustrated in the figure, there may be several groups of operating units 2, positioned both internally and externally to the perimeter wall 14 of the wheel 13A.

In this way it is possible to carry out non-contact processing operations, possibly of a different type, simultaneously on opposite sides of the ribbon-like article N.

Also in this case, the presence of a suction device 6 may be provided, possibly further positioned externally to the group of operating units 2 arranged externally to the perimeter wall 14.

As can be seen from the figures, in preferred embodiments, the apparatus 100 comprises at least three operating units 2 that are placed in different positions along the loop path 3. In further preferred embodiments the apparatus comprises at least six operating units 2.

However, it will be appreciated that the present application can also find application with different numbers of operating units 2 and in particular, the apparatus 100 may comprise two or more operating units 2.

As visible in Figure 2, the loop path 3 comprises a processing portion 31 and a reset portion 32, in which the path 3 is preferably ideally divided.

In this regard it will be appreciated that in preferred embodiments, the processing portion 31 and the reset portion 32 form respective angular sectors which, preferably, together form a 360° angle. Thus, in preferred embodiments, the operating units 2, during their motion around the axis X, may alternatively be positioned in the processing portion 31 and in the reset portion 32.

As mentioned above, and as illustrated in Figure 3, along the processing portion 31 the operating unit 2 faces the edge B of the ribbon-like article N and can perform a predetermined non-contact processing. Preferably, along the reset portion 32, it can be provided for a protection element 15 to be placed in a position so as to face the operating units 2 when they are in the reset portion 32 and interposed between the operating units 2 and the ribbon-like article N. In this way, it is possible to prevent the light beam produced by the operating units 2, or other emitted energy source, from reaching the ribbon-like article N in a different position with respect to the processing portion 31. Preferably the operating units 2 are configured in such a way that at each instant of operation of the apparatus 100 at least one of the units is placed in the processing portion 31 of the loop path 3 such as to perform the non-contact processing on the ribbon-like article N. With reference to further possible examples, in the case where there are three units 2, like in the case illustrated in the figure, at least two of them will preferably be placed in the processing portion and in the case where there are 6 units 2, at least three of them will preferably be placed in the processing portion. The operation of the apparatus 100 can provide for the units 2 to move in a different manner, in particular with a different speed, in the processing portion 31 and in the reset portion 32 of the loop path.

Advantageously, the speed of the units 2 along the processing portion 31 can be selected in such a way as to have a relative movement between the unit 2 and the ribbon-like article N suitable for carrying out the intended processing. It will therefore be possible to provide that the speed difference Δv between a first speed v1 of the unit 2, which represents the speed thereof along the processing segment 31, and the feed rate va of the ribbon-like article N is less than a predetermined value.

This value can be determined on the basis of the type of processing envisaged and on the basis of the technical characteristics of the operating units 2.

Within the reset portion 32, the operating units 2 may have a second speed v2, also different from the first speed v1.

In preferred embodiments, this speed difference allows the operating units to advance at the first speed v1 which is lower than the feed rate va of the ribbon-like article N and to recover this speed difference in the reset segment 32, where the unit 2 is accelerated. In other words, therefore, the second speed v2 is greater than the first speed v1.

The speed variation of the operating units 2 is preferably achieved through a variation device 4 for varying the displacement speed of the operating units 2, configured to modify the speed of each of said operating units 2, individually, according to their position along the loop path 3.

Thus, in preferred embodiments the variation device 4 may be configured to vary the speed of the operating unit 2 from the first speed v1 to the second speed v2 when transiting from the processing portion 31 to the reset portion 32, and vice versa from the second speed v2 to the first speed v1 when transiting from the reset portion 32 to the processing portion 31.

Preferably the variation device 4 can act on each of the arms 21, displace each of the arms 21, individually, along the rotating body 22. As can be seen from Figure 3, the arm 21 can rotate relative to the body 22 through rotation of the ring body 24 about the axis X. In other words, the body 24 can slide on the outer peripheral surface of the rotating body 22, thereby displacing the arm 21 that it supports.

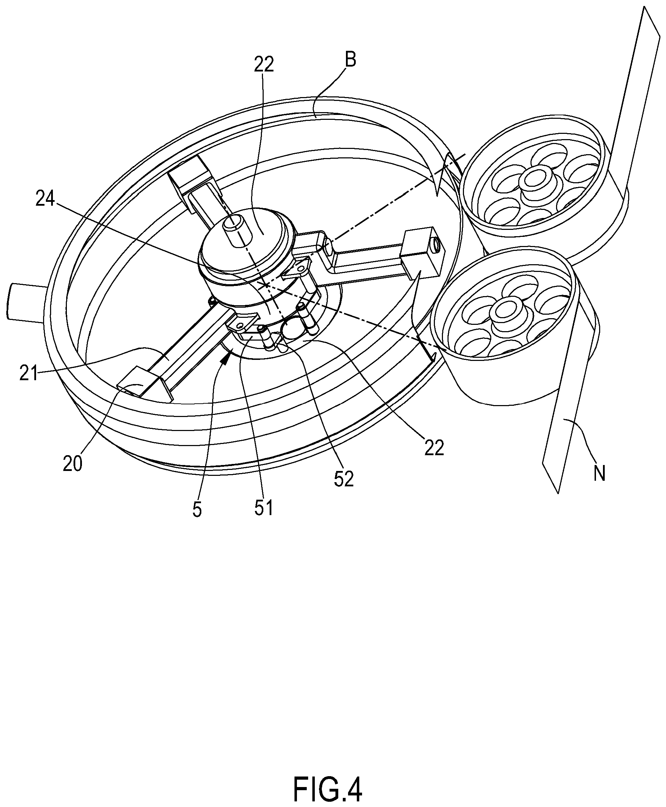

As illustrated in the embodiment of Figure 4, the movement of the body 24, or more generally of the arm 21, can be achieved by providing a first rod 51 rotatably connected to the rotating body 22 and a second rod 52 rotatably connected at a first end thereof to the arm 21 and at a second end thereof to the first rod 51 itself.

In this way, when the first rod 51 is rotated, a corresponding movement of the second rod 52 and, consequently, of the relative arm 21 is obtained. This rotation of the rod 51 can then intervene at specific positions of the units 2 along the loop path 3. The rod 51 of each arm 21 can also be rotated independently of the other rods, thus allowing each arm 21 to be moved independently of the others.

Preferably, the variation device 4 is in fact configured to displace the arm 21 with respect to said rotating body 22, in a direction that coincides with the direction of rotation of the same, when the arm 21 is in the reset portion 32, so as to speed it up. Advantageously, the arm 21 is displaced in the opposite direction when it is in the processing portion 31 so as to be slowed down.

In this way it will be possible to recover the deviation that is accumulated during processing on the ribbon-like article N along the processing portion 31 in the subsequent reset portion 32.

It will also be appreciated that the transit of the unit 2 in the reset portion 32 can advantageously be used to provide the instructions useful to perform the specific processing on the ribbon-like article N.

In this regard, it must be observed that even in the case of a realization of a repetitive pattern, the repetition rate of the pattern does not necessarily coincide with the rate of the operating units 2, i.e. with the time necessary to travel along the loop path 3 or the one necessary for a further operating unit to reach the processing portion 31 again, in the event that there are more than two operating units. The set of processing instructions initially provided to operating unit 2 may therefore no longer be correct in the light of this circumstance.

The transit of the operating unit 2 along the reset portion 32 can also be advantageously exploited to modify the processing instructions that are provided to the operating unit to perform a specific processing.

In other words, along the reset portion 2 it is possible to provide a second set of processing instructions through which the different rate illustrated above is taken into account, effectively modifying the processing which will be carried out by the operating unit 2 once it returns to the portion processing 31.

This second set can therefore take into account the different rates between the ribbon-like article N and the operating units 2, for example by resuming the processing of the pattern at the appropriate position.

It goes without saying that, in order to meet specific and contingent application needs, a person skilled in the art will be able to make further modifications and variants to the invention described so long as they stay within the scope of protection as defined by the following claims.

## Claims

1. Method for non-contact processing on a ribbon-like article (N), **characterized in that** the method comprises the following steps:
- Providing at least two operating units (2) configured to perform non-contact processing on the ribbon-like article (N), said operating units (2) being movable along a loop path (3) comprising a processing portion (31) along which said operating units face the ribbon-like article (N) and a reset portion (32), subsequent to said processing portion (31) along said loop path (3), wherein said operating units (2) move being placed the one in a different position from the other in said loop path (3),
- Providing said operating units (2) with a set of processing instructions on the basis of which to carry out a predetermined non-contact processing on the ribbon-like article (N),
- Advancing the ribbon-like article (N) on a conveying device (1),
- Performing by at least one of said operating unit (2) the predetermined non-contact processing provided to said operating unit (2) on the ribbon-like article (N) while said ribbon-like article (N) is moving on said conveying device (1) and at least one of said operating unit (2) is displacing along said processing portion (31),
- Providing one of said operating units with a further set of processing instructions (2) on the basis of which to carry out a further predetermined non-contact processing on the ribbon-like article (N) when said operating unit (2) transits along the reset portion (32),
- Performing by said operating unit (2) the further predetermined non-contact processing provided to said operating unit (2) on the ribbon-like article (N) while said ribbon-like article (N) is moving at said feed rate (va) and while said operating unit (2) is displacing along said processing portion (31).

2. Method according to claim 1, wherein said operating units (2) move at a first speed along said processing portion (31) and at a second speed (v2) along said reset portion (32), said second speed (v2) being preferably higher than said first speed (v1).

3. Method according to claim 2, wherein the ribbon-like article (N) is advanced at a feed rate (va), the speed difference (Dv) between said first speed (v1) and said feed rate (va) being lower than a predetermined value, said first speed (v1) being preferably lower and acting in the same direction as a linear feed rate (va) of the ribbon-shaped article (N).

4. Method according to any one of the preceding claims, wherein said operating units (2) rotate about an axis of rotation (X).

5. Method according to any one of the preceding claims, wherein at least one of said operating units (2) is placed in the processing portion (31) and performs the non-contact processing on the ribbon-like article (N) when the other of said operating units (2) is placed in the reset portion (32).

6. Method according to claim 5, comprising providing at least three operating units (2), wherein at least two of said operating units (2) are placed in said processing portion (31) and simultaneously perform non-contact processing on the ribbon-like article (N) when the other of said operating units (2) is placed in the reset portion (32).

7. Method according to any one of the preceding claims, wherein the speed of said operating units (2) is varied, individually, according to their position along said loop path (3).

8. Method according to claim 7, wherein said operating units (2) are supported on arms (21) constrained to a rotating body (22), the speed of each of said operating units (2) being varied by displacement of a respective arm (21) with respect to said rotating body (22), said arms being displaceable independently of each other.

9. Method according to any one of the preceding claims, wherein said ribbon-like article (N) is wound on a main wheel (13A) of the transport device (1).

10. Method according to any one of the preceding claims, wherein said ribbon-like article (N) is advanced on said transport device (1) with constant speed and tension.

11. Method according to any one of the preceding claims, wherein performing said non-contact processing comprises moving movable working elements (23) of said operating units (2) at a speed greater than the feed rate (va) of the ribbon-like article (N), preferably with a response time of the movable working elements (23) of the order of one millisecond.

12. Method according to any one of the preceding claims, wherein performing by at least one of said operating units (2) said predetermined processing comprises supplying energy to the ribbon-like article.

13. Method according to any of the preceding claim, wherein said non-contact processing is performed through laser.

14. Method according to any one of the preceding claims, wherein said non-contact processing includes patterning or etching processing.

15. Method according to any one of the preceding claims, wherein said non-contact processing is directed to the production of electrochemical cells.

## Patentansprüche

1. Verfahren zur berührungslosen Bearbeitung eines bandförmigen Gegenstands (N), **dadurch gekennzeichnet, dass** das Verfahren die folgenden Schritte aufweist:
- Vorsehen von zumindest zwei Betriebseinheiten (2), die eingerichtet sind, um eine berührungslose Bearbeitung des bandförmigen Gegenstands (N) auszuführen, wobei die Betriebseinheiten (2) entlang einer Schleifenbahn (3) bewegbar sind, die einen Bearbeitungsabschnitt (31), entlang dem die Betriebseinheiten dem bandförmigen Gegenstand (N) zugewandt sind, und einen Rückstellabschnitt (32) aufweist, der auf den Bearbeitungsabschnitt (31) entlang der Schleifenbahn (3) folgt, wobei sich die Betriebseinheiten (2) bewegen, um die eine in einer anderen Position als die andere in der Schleifenbahn (3) anzuordnen,
- Versehen der Betriebseinheiten (2) mit einem Satz von Bearbeitungsanweisungen, auf deren Grundlage eine vorbestimmte berührungslose Bearbeitung des bandförmigen Gegenstands (N) durchgeführt wird,
- Vorschieben des bandförmigen Gegenstands (N) auf einer Fördervorrichtung (1),
- Ausführen der vorbestimmten berührungslosen Bearbeitung, die an der Betriebseinheit (2) vorgesehen wird, des bandförmigen Gegenstands (N) durch zumindest eine der Betriebseinheiten (2), während sich der bandförmige Gegenstand (N) auf der Fördervorrichtung (1) bewegt und sich zumindest eine der Betriebseinheiten (2) entlang des Bearbeitungsabschnitts (31) verschiebt,
- Versehen einer der Betriebseinheiten mit einem weiteren Satz von Bearbeitungsanweisungen (2), auf deren Grundlage eine weitere vorbestimmte berührungslose Bearbeitung des bandförmigen Gegenstands (N) durchgeführt wird, wenn die Betriebseinheit (2) den Rückstellabschnitt (32) durchläuft,
- Ausführen der weiteren vorbestimmten berührungslosen Bearbeitung, die an der Betriebseinheit (2) vorgesehen wird, des bandförmigen Gegenstands (N) durch die Betriebseinheit (2), während sich der bandförmige Gegenstand (N) mit der Zuführgeschwindigkeit (va) bewegt und sich die Betriebseinheit (2) entlang des Bearbeitungsabschnitts (31) verschiebt.

2. Verfahren nach Anspruch 1, wobei sich die Betriebseinheiten (2) mit einer ersten Geschwindigkeit entlang des Bearbeitungsabschnitts (31) und mit einer zweiten Geschwindigkeit (v2) entlang des Rückstellabschnitts (32) bewegen, wobei die zweite Geschwindigkeit (v2) vorzugsweise höher als die erste Geschwindigkeit (v1) ist.

3. Verfahren nach Anspruch 2, wobei der bandförmige Gegenstand (N) mit einer Vorschubgeschwindigkeit (va) vorgeschoben wird, wobei die Geschwindigkeitsdifferenz (Dv) zwischen der ersten Geschwindigkeit (v1) und der Vorschubgeschwindigkeit (va) geringer ist als ein vorbestimmter Wert, wobei die erste Geschwindigkeit (v1) vorzugsweise geringer ist und in die gleiche Richtung wirkt wie eine lineare Vorschubgeschwindigkeit (va) des bandförmigen Gegenstands (N).

4. Verfahren nach einem der vorhergehenden Ansprüche, wobei die Betriebseinheiten (2) um eine Drehachse (X) rotieren.

5. Verfahren nach einem der vorhergehenden Ansprüche, wobei zumindest eine der Betriebseinheiten (2) im Bearbeitungsabschnitt (31) angeordnet ist und die berührungslose Bearbeitung des bandförmigen Gegenstands (N) ausführt, wenn die andere der Betriebseinheiten (2) im Rückstellabschnitt (32) angeordnet ist.

6. Verfahren nach Anspruch 5, das ein Vorsehen von zumindest drei Betriebseinheiten (2) aufweist, wobei zumindest zwei der Betriebseinheiten (2) im Bearbeitungsabschnitt (31) angeordnet sind und gleichzeitig eine berührungslose Bearbeitung des bandförmigen Gegenstands (N) ausführen, wenn die andere der Betriebseinheiten (2) im Rückstellabschnitt (32) angeordnet ist.

7. Verfahren nach einem der vorhergehenden Ansprüche, wobei die Geschwindigkeit der Betriebseinheiten (2) einzeln entsprechend ihrer Position entlang der Schleifenbahn (3) variiert wird.

8. Verfahren nach Anspruch 7, wobei die Betriebseinheiten (2) auf Armen (21) gelagert sind, die an einem Drehkörper (22) befestigt sind, wobei die Geschwindigkeit jeder der Betriebseinheiten (2) durch Verschieben eines jeweiligen Arms (21) in Bezug auf den Drehkörper (22) variiert wird, wobei die Arme unabhängig voneinander verschiebbar sind.

9. Verfahren nach einem der vorhergehenden Ansprüche, wobei der bandförmige Gegenstand (N) auf ein Hauptrad (13A) der Transportvorrichtung (1) gewickelt ist.

10. Verfahren nach einem der vorhergehenden Ansprüche, wobei der bandförmige Gegenstand (N) auf der Transportvorrichtung (1) mit konstanter Geschwindigkeit und Spannung vorgeschoben wird.

11. Verfahren nach einem der vorhergehenden Ansprüche, wobei ein Ausführen der berührungslosen Bearbeitung ein Bewegen beweglicher Arbeitselemente (23) der Betriebseinheiten (2) mit einer Geschwindigkeit aufweist, die größer als die Vorschubgeschwindigkeit (va) des bandförmigen Gegenstands (N) ist, vorzugsweise mit einer Reaktionszeit der beweglichen Arbeitselemente (23) in der Größenordnung von einer Millisekunde.

12. Verfahren nach einem der vorhergehenden Ansprüche, wobei ein Ausführen der vorbestimmten Bearbeitung durch zumindest eine der Betriebseinheiten (2) ein Zuführen von Energie zum bandförmigen Gegenstand aufweist.

13. Verfahren nach einem der vorhergehenden Ansprüche, wobei die berührungslose Bearbeitung mittels Laser ausgeführt wird.

14. Verfahren nach einem der vorhergehenden Ansprüche, wobei die berührungslose Bearbeitung eine Strukturierungs- oder Ätzbearbeitung aufweist.

15. Verfahren nach einem der vorhergehenden Ansprüche, wobei die berührungslose Bearbeitung auf die Herstellung elektrochemischer Zellen ausgerichtet ist.

## Revendications

1. Procédé de traitement sans contact d'un article en forme de ruban (N), **caractérisé en ce que** le procédé comprend les étapes suivantes consistant à :
- fournir au moins deux unités opérationnelles (2) configurées pour effectuer un traitement sans contact sur l'article en forme de ruban (N), lesdites unités opérationnelles (2) étant mobiles le long d'une trajectoire en boucle (3) comprenant une partie de traitement (31) le long de laquelle lesdites unités opérationnelles font face à l'article en forme de ruban (N) et une partie de réinitialisation (32), après ladite partie de traitement (31) le long de ladite trajectoire en boucle (3), dans laquelle lesdites unités opérationnelles (2) se déplacent en étant placées l'une dans une position différente de l'autre dans ladite trajectoire en boucle (3),
- fournir auxdites unités opérationnelles (2) un ensemble d'instructions de traitement sur la base desquelles effectuer un traitement sans contact prédéterminé sur l'article en forme de ruban (N),
- faire avancer l'article en forme de ruban (N) sur un dispositif de transport (1),
- exécuter par au moins l'une desdites unités opérationnelles (2) le traitement sans contact prédéterminé fourni à ladite unité opérationnelle (2) sur l'article en forme de ruban (N) alors que ledit article en forme de ruban (N) se déplace sur ledit dispositif de transport (1) et qu'au moins l'une desdites unités opérationnelles (2) se déplace le long de ladite partie de traitement (31),
- fournir à l'une desdites unités opérationnelles un autre ensemble d'instructions de traitement (2) sur la base desquelles effectuer un autre traitement sans contact prédéterminé sur l'article en forme de ruban (N) lorsque ladite unité opérationnelle (2) transite le long de la partie de réinitialisation (32),
- exécuter par ladite unité opérationnelle (2) le traitement sans contact prédéterminé fourni à ladite unité opérationnelle (2) sur l'article en forme de ruban (N) pendant que ledit article en forme de ruban (N) se déplace à ladite vitesse d'avance (va) et pendant que ladite unité opérationnelle (2) se déplace le long de ladite partie de traitement (31).

2. Procédé selon la revendication 1, dans lequel lesdites unités opérationnelles (2) se déplacent à une première vitesse le long de ladite partie de traitement (31) et à une seconde vitesse (v2) le long de ladite partie de réinitialisation (32), ladite seconde vitesse (v2) étant de préférence supérieure à ladite première vitesse (v1).

3. Procédé selon la revendication 2, dans lequel l'article en forme de ruban (N) est avancé à une vitesse d'avance (va), la différence de vitesse (Dv) entre ladite première vitesse (v1) et ladite vitesse d'avance (va) étant inférieure à une valeur prédéterminée, ladite première vitesse (v1) étant de préférence inférieure et agissant dans la même direction qu'une vitesse d'avance linéaire (va) de l'article en forme de ruban (N).

4. Procédé selon l'une quelconque des revendications précédentes, dans lequel lesdites unités opérationnelles (2) tournent autour d'un axe de rotation (X).

5. Procédé selon l'une quelconque des revendications précédentes, dans lequel au moins l'une desdites unités opérationnelles (2) est placée dans la partie de traitement (31) et effectue le traitement sans contact sur l'article en forme de ruban (N) lorsque l'autre desdites unités opérationnelles (2) est placée dans la partie de réinitialisation (32).

6. Procédé selon la revendication 5, comprenant la fourniture d'au moins trois unités opérationnelles (2), dans lequel au moins deux desdites unités opérationnelles (2) sont placées dans ladite partie de traitement (31) et effectuent simultanément un traitement sans contact sur l'article en forme de ruban (N) lorsque l'autre desdites unités opérationnelles (2) est placée dans la partie de réinitialisation (32).

7. Procédé selon l'une quelconque des revendications précédentes, dans lequel la vitesse desdites unités opérationnelles (2) est modifiée, individuellement, en fonction de leur position le long de ladite trajectoire en boucle (3).

8. Procédé selon la revendication 7, dans lequel lesdites unités opérationnelles (2) sont supportées par des bras (21) contraints à un corps rotatif (22), la vitesse de chacune desdites unités opérationnelles (2) étant modifiée par le déplacement d'un bras respectif (21) par rapport audit corps rotatif (22), lesdits bras pouvant être déplacés indépendamment l'un de l'autre.

9. Procédé selon l'une quelconque des revendications précédentes, dans lequel ledit article en forme de ruban (N) est enroulé sur une roue principale (13A) du dispositif de transport (1).

10. Procédé selon l'une quelconque des revendications précédentes, dans lequel ledit article en forme de ruban (N) est avancé sur ledit dispositif de transport (1) avec une vitesse et une tension constantes.

11. Procédé selon l'une quelconque des revendications précédentes, dans lequel l'exécution dudit traitement sans contact consiste à déplacer les éléments de travail mobiles (23) desdites unités opérationnelles (2) à une vitesse supérieure à la vitesse d'avance (va) de l'article en forme de ruban (N), de préférence avec un temps de réponse des éléments de travail mobiles (23) de l'ordre d'une milliseconde.

12. Procédé selon l'une quelconque des revendications précédentes, dans lequel l'exécution par au moins l'une desdites unités opérationnelles (2) dudit traitement prédéterminé consiste à fournir de l'énergie à l'article en forme de ruban.

13. Procédé selon l'une quelconque des revendications précédentes, dans lequel ledit traitement sans contact est effectué au moyen d'un laser.

14. Procédé selon l'une quelconque des revendications précédentes, dans lequel ledit traitement sans contact comprend un traitement de structuration ou de gravure.

15. Procédé selon l'une quelconque des revendications précédentes, dans lequel ledit traitement sans contact est destiné à la production de cellules électrochimiques.
